# EUROPÄISCHE PATENTANMELDUNG

(11) **EP 4 183 555 A1**
(43) Veröffentlichungstag der Anmeldung: **24.05.2023**
(21) Anmeldenummer: 21208841.3
(22) Anmeldetag: 17.11.2021
(51) Int. Cl.: B29C 64/124, B29C 64/182, B29C 64/241, B29C 64/35, B33Y 10/00, B33Y 30/00, B33Y 40/00, B33Y 70/10, B33Y 80/00, B22F 10/00, B22F 12/00

(54) **VERFAHREN UND VORRICHTUNG ZUM SIMULTANEN AUFBAU VON FORMKÖRPERN**

(71) Anmelder: Ivoclar Vivadent AG, 9494 Schaan (LI)
(72) Erfinder: John, Hendrik, 9470 Buchs SG (CH); Cavegn, Nadja, 9498 Planken (LI)
(74) Vertreter: Uexküll & Stolberg

(57) **Zusammenfassung**

Ein Verfahren zum simultanen Aufbau einer Vielzahl von Formkörpern durch schichtweises, stereolithographisches Aushärten von photopolymerisierbaren Materialien, wobei in wenigstens einer ersten (12) und einer neben der ersten liegenden, zweiten Bauzone (12') an der Unterseite einer vertikal verfahrbaren, horizontal ausgedehnten Bauplattform (10) Formkörper (20, 20') aufgebaut werden, indem
die Bauplattform (10) zu einer Wannenanordnung (4) hin abgesenkt wird, die in wenigstens einem ersten Wannensegment (8) und einem zweiten, neben dem ersten liegenden Wannensegment (8') mit jeweils durchsichtigem Wannensegmentboden unterschiedliche photopolymerisierbare Materialien enthält,
durch das Absenken der Bauplattform (10) auf die Wannensegmentböden zu für die im Bau befindlichen Formkörper Materialschichten mit definierter Schichtdicke gebildet werden,
die gebildeten Schichten durch eine Belichtungseinheit (2) durch die durchsichtigen Wannensegmentböden hindurch ortselektiv belichtet werden, um sie ortselektiv auszuhärten, und
die Bauplattform (10) wieder angehoben wird und die vorherigen Schritte wiederholt werden, bis die Formkörper (20, 20') durch sukzessive ausgehärtete Schichten aufgebaut sind,
dadurch gekennzeichnet, dass die Bauplattform (10) während des Bauvorgangs nach einem Bauabschnitt mit Aushärtung einer für diesen Bauabschnitt vorgegebenen Anzahl von Schichten durch einen Drehantrieb (11) um eine zentrale, vertikale Drehachse so gedreht wird, dass die erste und die zweite Bauzone (12, 12') nach der Drehung jeweils über einem anderen Wannensegment (8, 8') liegen, um daraufhin den Bauvorgang in der ersten und in der zweiten Bauzone (12, 12') jeweils mit einem anderen photopolymerisierbaren Material fortzusetzen.

## Beschreibung

Die vorliegende Erfindung betrifft ein Verfahren zum simultanen Aufbau einer Vielzahl von Formkörpern durch schichtweises, stereolithographisches Aushärten von photopolymerisierbaren Materialien, wobei in wenigstens einer ersten und einer neben der ersten liegenden, zweiten Bauzone an der Unterseite einer vertikal verfahrbaren, horizontal ausgedehnten Bauplattform jeweils wenigstens ein Formkörper aufgebaut wird, indem
die Bauplattform zu einer Wannenanordnung hin abgesenkt wird, die in wenigstens einem ersten und einem zweiten, neben dem ersten liegenden Wannensegment mit jeweils durchsichtigem Wannensegmentboden unterschiedliche photopolymerisierbare Materialien enthält, wobei jede der ersten und zweiten Bauzonen über einem der ersten und zweiten Wannensegmente liegend und in dessen Umfang passend angeordnet ist,
durch das Absenken der Bauplattform auf die Wannensegmentböden zu für die im Bau befindlichen Formkörper in der ersten und der zweiten Bauzone Materialschichten mit definierter Schichtdicke gebildet werden,
die gebildeten Schichten durch eine Belichtungseinheit durch die durchsichtigen Wannensegmentböden hindurch ortselektiv belichtet werden, um sie ortselektiv auszuhärten, und
die Bauplattform wieder angehoben wird, gegebenenfalls fehlende photopolymerisierbare Materialien zugeführt und die vorher beschriebenen Schritte wiederholt werden, bis die Formkörper an der ersten und an der zweiten Bauzone durch sukzessive ausgehärtete Schichten aufgebaut sind.

Ein derartiges Verfahren und eine zur Ausführung des Verfahrens geeignete Vorrichtung sind in WO 2021/040898 A1 beschrieben. Es ist eine vertikal verfahrbare Bauplattform vorgesehen, die an ihrer einer Wannenordnung zugewandten Unterseite mehrere Bauzonen aufweist. Die Wannenanordnung ist durch eine Wanne mit durchsichtigem Wannenboden, einer umlaufenden Seitenwand und wenigstens eine Teilungswand gebildet, die die Wannenfläche in wenigstens zwei Wannensegmente aufteilt. Die Anordnung der Bauzonen entspricht der Anordnung der Wannensegmente, so dass jede Bauzone über einem Wannensegment liegt und durch Absenken der Bauplattform in das zugeordnete Wannensegment gefahren werden kann. Durch Absenken der Bauzonen wird so jeweils zwischen der zuletzt ausgehärteten Schicht von Formkörpern in den Bauzonen und dem Wannensegmentboden eine Schicht aus photopolymerisierbarem Material in dem Wannensegment gebildet, wobei diese aktuell gebildeten Schichten an den im Aufbau befindlichen Formkörpern dann im nächsten Schritt durch eine Belichtungseinheit durch den Wannenboden hindurch ortselektiv belichtet werden, um die aktuellen Schichten in ortselektiver Weise mit jeweils vorgegebener Kontur auszuhärten. Nach der Aushärtung durch die Belichtung wird die Bauplattform wieder angehoben und gegebenenfalls fehlendes photopolymerisierbares Material nachgeführt. Diese beschriebenen Schritte von Absenken der Bauplattform zur Definition neuer Schichten an den im Aufbau befindlichen Formkörpern, ortselektive Belichtung zur Aushärtung der aktuelle definierten Schichten an den im Aufbau befindlichen Formkörpern und Anheben der Bauplattform, um photopolymerisierbares Material in das Gebiet in das zuletzt ausgehärteten Schicht nachfließen zu lassen bzw. dorthin zu fördern, werden sukzessive solange wiederholt, bis durch die aufgebauten Schichtfolgen der Aufbau der Formkörper abgeschlossen ist.

Die zur Aushärtung des photopolymerisierbaren flüssigen Baumaterials verwendete Belichtungseinheit weist typischerweise eine Lichtquelle und einen örtlichen Lichtmodulator auf, der Licht von der Lichtquelle in ortabhängig gesteuerter Stärke auf ein Belichtungsgebiet richtet. Der Lichtmodulator kann z.B. durch eine Flüssigkristallanzeige oder durch eine Mikrospiegelvorrichtung auf einem Chip realisiert sein, wobei jeder Mikrospiegel ein Bildelement (Pixel) im Belichtungsgebiet zugeordnet ist und jeder Mikrospiegel mit gesteuerter Frequenz verkippt wird, um jedem Bildelement gesteuert durch das Tastverhältnis des zugeordneten Mikrospiegel eine gewünschte Intensität zuzuordnen.

Bei dem in WO 2021/040898 A1 beschriebenen Verfahren ist die Zuordnung von jeder Bauzone zu einem Wannensegment permanent, d.h. der gesamte Bauvorgang von Formkörpern an einer Bauzone findet mit dem photopolymerisierbaren Material statt, das sich in dem zugeordneten Wannensegment befindet. Dabei können in verschiedenen Wannensegmenten verschiedene photopolymerisierbare Materialien eingefüllt sein, so dass an den verschiedenen Bauzonen jeweils Formkörper aus verschiedenen Materialen aufgebaut werden können. Die Bauzonen sind gegenüber der Unterseite der Bauplattform abgesenkte Oberflächenbereiche an der Bauplattform, deren Flächenform an die der Wannensegmente angepasst sind, so dass durch Absenken der Bauplattform die Bauzonen in die Wannensegmente bis nahe an die Wannensegmentböden herangefahren werden können, ohne mit Seitenwänden von Wannensegmenten zu kollidieren.

Das parallele Aufbauen von Formkörpern aus verschiedenen Baumaterialien kann z.B. im Fall von Dentalrestaurationen, wie etwa Zahnkronen, in einem Dentallabor nützlich sein. Dann kann an einer ersten Bauzone eine erste Mehrzahl von Zahnkronen aus einem ersten photopolymerisierbaren Material mit ersten optischen Eigenschaften, an einer zweiten und gegebenenfalls dritten Bauzone jeweils eine Mehrzahl zweiter und dritter Zahnkronen aus zweiten und dritten photopolymerisierbaren Materialien mit anderen optischen Eigenschaften aufgebaut werden.

Bei vielen Arten von Formkörpern, insbesondere auch bei Dentalrestaurationen, ist es für ein natürliches Aussehen wünschenswert, in den aufgebauten Formkörpern Materialübergänge zu realisieren, d. h. nach einem Bauabschnitt mit einer vorgegebenen Anzahl von ausgehärteten Schichten eines ersten Baumaterials den Bauvorgang dann mit einem anderen Baumaterial fortzusetzen und gegebenenfalls während des Bauvorgangs des Formkörpers mehrere Materialwechsel vorzunehmen.

In diesem Zusammenhang sind Bauverfahren bekannt, bei denen Bauvorgänge mit einer Bauplattform mit einer einzelnen Bauzone verwendet werden, die während des Bauvorgangs für einen Baumaterialwechsel gegenüber einer Wannenanordnung mit mehreren Wannensegmenten mit unterschiedlichen Baumaterialien verfahren werden kann, um so aufeinanderfolgende Bauabschnitte mit verschiedenen Baumaterialien zu ermöglichen, wie beispielsweise in DE 10 2007 010 624 A1 beschrieben.

Bei bekannten Verfahren sind aber keine simultanen Bauvorgänge an mehreren Bauzonen der Bauplattform in verschiedenen Wannensegmenten möglich.

Es ist Aufgabe der vorliegenden Erfindung, ein Verfahren und eine zur Durchführung des Verfahrens geeignete Vorrichtung anzugeben, mit denen simultane Bauvorgänge an einer Mehrzahl von Bauzonen einer Bauplattform mit unterschiedlichen Baumaterialien bei gleichzeitiger Möglichkeit, während der simultanen Bauvorgänge Materialwechsel vorzunehmen, möglich sind.

Zur Lösung dieser Aufgabe dient das Verfahren mit den Merkmalen des Patentanspruchs 1 und die Vorrichtung mit den Merkmalen des Patentanspruchs 15. Vorteilhafte Ausführungsformen der Erfindung sind in den Unteransprüchen aufgeführt.

Bei dem erfindungsgemäßen Verfahren wird die Bauplattform während des Bauvorgangs nach einem Bauabschnitt mit Aushärtung einer für diesen Bauabschnitt vorgegebenen Anzahl von Schichten um eine zentrale, vertikale Drehachse so gedreht, dass die erste und die zweite Bauzone nach der Drehung jeweils über einem anderen Wannensegment liegen, um den Bauvorgang daraufhin in der ersten und in der zweiten Bauzone jeweils mit einem anderen photopolymerisierbaren Baumaterial in dem anderen Wannensegment fortzusetzen. Vertikal ist die Richtung die senkrecht zu der horizontal ausgedehnten Bauplattform und senkrecht zu dem horizontal ausgedehnten Wannenboden steht. Horizontal ist auch der Flüssigkeitsspiegel eines in einem der Wannensegmente befindlichen flüssigen Baumaterials.

Die zentrale, vertikale Drehachse der Bauplattform liegt auf der Rotationssymmetrieachse der Wannenanordnung, die eine n-zählige oder n-fache Rotationssymmetrie mit *n* ≥ 2 aufweist. An der Bauplattform sind zwischen 2 und *n* zu den Wannensegmenten korrespondierende Bauzonen angeordnet, wobei der Drehschritt zum Materialwechsel 360°/*n* oder ein Vielfaches davon ist (der Begriff "Vielfaches" wird in der vorliegenden Anmeldung im Sinne von "ganzzahliges Vielfaches" verwendet).

Ein einfachstes Beispiel ist in einer bevorzugten Ausführungsform eine Wannenanordnung mit zwei nebeneinanderliegenden Wannensegmenten und eine Bauplattform mit zwei entsprechenden nebeneinanderliegenden Bauzonen gezeigt, wobei die Bauplattform zum Wechsel des photopolymerisierbaren Baumaterials für die Formkörper an der ersten und an der zweiten Bauzone um die zentral zwischen den beiden Bauzonen verlaufenden vertikale Drehachse um 180° gedreht wird (2-fache Rotationssymmetrie).

Bei einer 4-fachen Rotationssymmetrie werden in einer bevorzugten Ausführungsform eine quadratische, in vier Quadranten mit jeweils einem Wannensegment unterteilte Wannenanordnung und eine quadratische, in vier Quadranten unterteilte Bauplattform, von denen zwei, drei oder vier jeweils mit einer daran befindlichen Bauzone versehen sind, verwendet und zum Materialwechsel eine Drehung der Bauplattform um 90° oder ein Vielfaches davon durchgeführt.

In einer bevorzugten Ausführungsform werden entweder (i) eine kreisförmige Wannenanordnung, die in eine Anzahl von *n* ≥ 2 kreissegmentförmige Wannensegmente unterteilt ist, und eine Bauplattform mit einer Anzahl zwischen 2 und *n* kreisförmigen Bauzonen daran verwendet und die Bauplattform wird zum Materialwechsel um einen Winkel von 360°/*n* oder ein Vielfaches davon gedreht, oder (ii) alternativ werden eine Wannenanordnung in Form eines regelmäßigen n-Ecks mit *n* ≥ 3, das in *n* Wannensegmente in Form kongruenter gleichschenkliger Dreiecke unterteilt ist, und eine Bauplattform mit einer Anzahl zwischen 2 und n Bauzonen in Form von gleichschenkligen Dreiecken gleicher Größe daran verwendet und wird die Bauplattform zum Materialwechsel um einen Winkel von 360°/n oder ein Vielfaches davon gedreht.

In einer bevorzugten Ausführungsform wird die vertikale Lage eines Materialübergangs in einem Formkörper an einer Bauzone durch Auswahl der Anzahl der gebauten Schichten festgelegt, bis durch Drehung der Bauplattform ein Materialwechsel durchgeführt wird.

In einer bevorzugten Ausführungsform wird die vertikale Lage eines Materialübergangs in einem Formkörper in einer Bauzone durch Auswahl der Anzahl der gebauten Schichten festgelegt, bis durch Drehung der Bauplattform ein Materialwechsel durchgeführt wird, und wird die vertikale Lage eines Materialübergangs in einem anderen Formkörper unabhängig davon durch Festlegung einer ausgewählten vertikalen Länge einer Stützstruktur bestimmt, an der der andere Formkörper an der Oberfläche der zugehörigen Bauzone aufgehängt ist. Auf diese Weise kann grundsätzlich, wenn eine Vielzahl von Formkörpern simultan gebaut wird, für jeden Formkörper durch die individuell festgelegte Länge seiner Stützstruktur die vertikale Lage eines Materialübergangs in dem Formkörper individuell festgelegt werden.

In einer bevorzugten Ausführungsform wird an einer Bauzone ein Formkörper aufgebaut, wobei die Ausrichtung der Ebene des Materialübergangs im Formkörper durch Festlegung der Neigung der dreidimensionalen Modelldaten (CAD-Daten) des im Bau befindlichen Formkörpers relativ zur Ebene der Bauzone individuell gewählt und dadurch in dem Formkörper eine individuell festgelegte Neigung der Materialübergangsebene zum Formkörper realisiert wird (diese Neigung kann quantitativ als Neigung der Ebenen der gebauten Schichten zu einer Längsachse des Formkörpers oder relativ zu einer ebenen Stirnfläche des Formkörpers definiert sein).

In einer bevorzugten Ausführungsform wird die Belichtungseinheit so gesteuert, dass der für die Aushärtung einer Schicht durch die Einstrahlung der Belichtungseinheit bewirkte Energieeintrag pro bestrahltem Flächenelement für jedes Wannensegment einen individuell vorgegebenen, auf das in dem jeweiligen Wannensegment befindliche photopolymerisierbare Material abgestimmten Wert hat. Das kann z. B. dadurch realisiert werden, dass jedes Wannensegment einem individuell zugeordneten Wert von Belichtungsschritten mit vorgegebener Belichtungsdauer zugeordnet ist; einem Wannensegment, das aufgrund des darin enthaltenen photopolymerisierbaren Materials einen höheren Energieeintrag zur Aushärtung der Schicht erhalten soll, wird daher eine größere Anzahl von Belichtungsschritten zur Aushärtung der Schicht zugeordnet, so dass das Wannensegment effektiv eine längere Belichtungsdauer für die Aushärtung der Schicht hat als andere Wannensegmente.

In einer bevorzugten Ausführungsform wird ein Bauverfahren ausgeführt, bei dem aus photopolymerisierbaren Materialien als Formkörper Dentalrestaurationen in Form von herausnehmbaren dentalen Teil- oder Vollprothesen aufgebaut werden. In diesem Fall sind typische Baumaterialien sogenannte Schlicker (mit anorganischen Füllstoffen (z.B. pulverförmige keramische oder glaskeramische Materialien) gemischte Polymervorläuferkomponenten), aus denen als Formkörper zunächst Grünlinge aufgebaut werden. Die Grünlinge werden dann durch thermische Behandlung von Polymer befreit (Entbindern) und durch weitere thermische Behandlung gesintert, um sie zu verfestigen.

In einer bevorzugten Ausführungsform wird ein Bauverfahren ausgeführt, bei dem als Formkörper Dentalrestaurationen aufgebaut werden, die Kompositwerkstoffe, Glaskeramik oder Oxidkeramik enthalten. Nach dem Bauvorgang zum Aufbau von entsprechenden Grünlingen und thermischer Behandlung (Entbindern, Sintern) bestehen die Dentalrestaurationen dann aus Kompositwerkstoffen, Glaskeramik oder Oxidkeramik.

In bevorzugten Ausführungsformen wird bei einem Materialwechsel vor der Fortsetzung des Bauvorgans in einem anderen Baumaterial ein Zwischenreinigungsschritt durchgeführt, wobei der Zwischenreinigungsschritt eine chemische Reinigung in Lösungsmittel, eine mechanische Reinigung mit einem mechanischen Reinigungshilfsmittel, wie beispielsweise einem Tuch, einem Schwamm oder einem Silikonabstreifer, oder eine Kombination der genannten chemischen und mechanischen Reinigungen beinhaltet.

Dabei kann nach dem Zwischenreinigungsschritt ein Trocknungsschritt durchgeführt werden.

Mit dem Verfahren der vorliegenden Erfindung können auch Formkörper aufgebaut werden, wobei zunächst eine Schicht ausgehärtet wird und im nächsten Schritt vertikal auf gleicher Höhe horizontal daran anschließend eine weitere Schicht, aus dem gleichen oder einem anderen photopolymerisierbaren Material angebaut wird. In diesem Fällen bilden mehrere nebeneinander liegende Schichten einen Gesamtschichtverbund, wobei die nebeneinander liegenden Schichten des Schichtverbundes aus unterschiedlichen Materialien bestehen können.

In einer bevorzugten Ausführungsform wird die Bauplattform nach Aushärten von ersten Bereichen von Schichten von Formkörpern an den Bauzonen um die vertikale Drehachse gedreht und anschließend auf gleicher vertikale Höhe an die ersten Bereich angrenzende zweite Bereiche von Schichten mit einem anderen photopolymerisierbaren Material ausgehärtet.

Diese Bauweise kommt insbesondere beim Aufbau von Formkörpern zum Einsatz, die eine Shell-Core-Struktur (Schalen/Kern-Struktur) haben, d.h. der Formkörper weist einen Kern aus einem ersten Photopolymermaterial und eine diese umgebende Hülle aus einem zweiten Photopolymermaterial auf. Dazu wird z.B. in einem ersten Schritt die Schicht der Kernzone ausgehärtet und anschließend in einem weiteren Schritt die Schicht der dieser umfassende Hüllen- oder Schalenzone ausgehärtet.

Diese Bauweise von Formkörpern mit Kernbereichen und Hüllenbereichen ist insbesondere beim additiven Aufbau von Dentalrestaurationen von Interesse. Hier ist es oft erwünscht einen Kernbereich mit einer ersten Farbe und einer geringeren Transluzenz zu erhalten, der von einer dünneren Schale von einem andersfarbigen Material mit höherer Transluzenz umgeben ist, um dem Aussehen von natürlichen Zähnen möglichst nahe zu kommen.

Gemäß einem weiteren Aspekt wird eine Vorrichtung bereitgestellt zum simultanen Aufbau einer Vielzahl von Formkörpern durch schichtweises, stereolithographisches Aushärten von photopolymerisierbaren Materialien, mit
einer vertikal verfahrbar aufgehängten, horizontal ausgedehnten Bauplattform, an deren Unterseite wenigstens eine erste und eine neben der ersten liegende, zweite Bauzone vorhanden ist,
eine sich unter der Bauplattform befindliche Wannenanordnung, die wenigstens ein erstes und ein zweites, neben dem ersten liegendes Wannensegment zur Aufnahme eines ersten und eines zweiten, von dem erstem verschiedenen unterschiedlicher photopolymerisierbaren Materials in dem ersten und dem zweiten Wannensegment aufweist, wobei die Wannensegmentböden lichtdurchlässig sind,
wobei jede der ersten und zweiten Bauzonen über einem der ersten und zweiten Wannensegmente liegend und in dessen Umfang passend (was bedeutet, dass das die Bauplattform mit der Bauzone bis nahe an den Boden des Wannensegments abgesenkt werden kann, ohne an Seitenwände des Wannensegments zu stoßen) angeordnet ist, und
einer unter der Wannenanordnung angeordnete Belichtungseinheit zur ortsselektiven Belichtung von photopolymerisierbaren Schichten durch die Wannensegmentböden hindurch,
dadurch gekennzeichnet, dass die vertikal verfahrbare Bauplattform um eine vertikale Achse drehbar gelagert und mit einem integrierten Drehantrieb versehen ist, der dazu ansteuerbar ist, um die Bauplattform um einen vorgegebenen Drehschritt zu drehen, wobei die vertikale Drehachse zentral zu der Bauplattform und der Wannenanordnung so verläuft, dass durch Drehung der Bauplattform um den vorgegebenen Drehschritt die erste und die zweite Bauzone nach der Drehung jeweils über einem anderen von den ersten und zweiten Wannensegmenten liegen, um den Bauvorgang in der ersten und in der zweiten Bauzone jeweils mit einem anderen photopolymerisierbaren Material fortzusetzen.

Die Erfindung wird im Folgenden an Hand von Ausführungsbeispielen in den Zeichnungen beschrieben, in denen:
Figur 1 eine schematische Seitenansicht einer Vorrichtung zeigt, die zur Durchführung des erfindungsgemäßen Verfahrens geeignet ist, und
Figuren 2 bis 4 schematische Seitenansichten der Vorrichtung mit verschiedenen Konstellationen von im Bau befindlichen Formkörpern zeigen, und
Figuren 5a-5h schematische Querschnittsansichten in aufeinanderfolgenden Verfahrensschritten eines Ausführungsform des erfindungsgemäßen Verfahrens zeigen, mit dem Formkörper mit einem Kern und einer Hülle aus unterschiedlichen Materialien aufgebaut werden.

Es sei vorausgeschickt, dass in den Figuren die aufzubauenden Formkörper schematisch als quaderförmige Objekte angedeutet sind; es ist natürlich davon auszugehen, dass in der Praxis tatsächlich Körper mit komplizierteren Formen aufzubauen sind, z.B. Formkörper, die als Dentalrestaurationen, wie etwa Zahnkronen, dentale Teil- oder Vollprothesen etc., zum Einsatz kommen können.

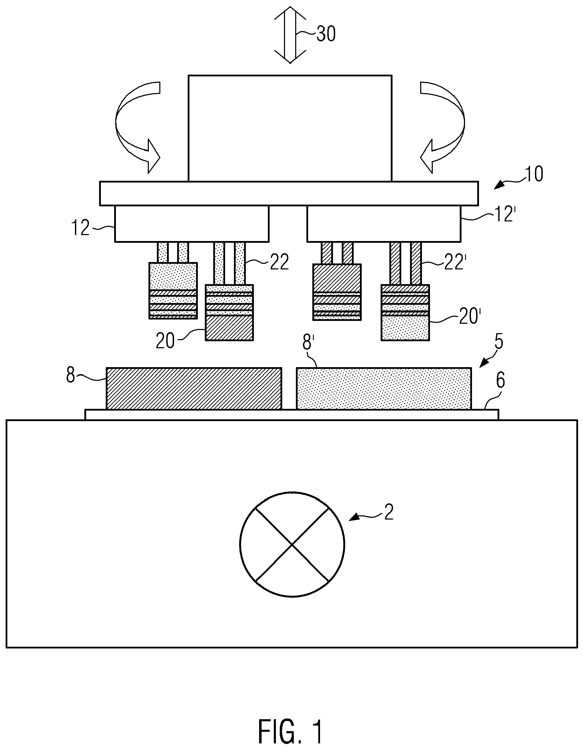

Figur 1 illustriert beispielhaft eine Vorrichtung und ein Verfahren zum simultanen Aufbau von Formkörpern mit wechselnden Baumaterialien. Die Vorrichtung umfasst eine Belichtungseinheit 2, die von unten eine Wannenanordnung 4 ortselektiv belichtet, deren Wannenboden 6 wenigstens in den Hauptbereichen der Wannensegmentböden durchsichtig ist. Die Wannenanordnung 4 ist in Figur 1 schematisch mit einem ersten Wannensegment 8 und einem neben dem ersten liegenden, zweiten Wannensegment 8' dargestellt, die unterschiedliche photopolymerisierbaren Materialien enthalten.

Oberhalb der Wannenanordnung 4 ist eine Bauplattform 10 an einer vertikal verfahrbaren Aufhängung 30 aufgehängt, die schematisch durch einen vertikalen Doppelpfeil angedeutet ist. An der Bauplattform befinden sich an deren der Wannenanordnung 4 zugewandten Unterseite eine erste Bauzone 12 und eine zweite Bauzone 12'. In der in Figur 1 dargestellten Konstellation ist die Bauzone 12 dem ersten Wannensegment 8 und die zweite Bauzone 12' dem zweiten Wannensegment 8' zugeordnet.

In der in Figur 1 dargestellten Situation wird aktuell an der ersten Bauzone 12 ein im Bau befindlicher Formkörper 20 mit Schichten eines ersten Baumaterials weitergebaut, während an der zweiten Bauzone 12' an dem daran hängenden, im Aufbau befindlichen Formkörper 20' mit einem zweiten Baumaterial weitergebaut wird.

Zur Aushärtung einer weiteren Schicht wird die Bauplattform 10 an ihrer vertikal verfahrbaren Aufhängung 30 zu der Wannenanordnung hin abgesenkt, bis die im Bau befindlichen Formkörper 20, 20' mit der unteren Oberfläche der zuletzt ausgehärteten Schicht bis auf eine Höhe von einer Schichtdicke über die obere Oberfläche des durchsichtigen Wannenbodens 6 abgesenkt ist, wodurch zwischen der zuletzt ausgehärteten Schicht und dem Wannenboden eine Materialschicht des jeweiligen photopolymerisierbaren Materials mit einer definierten Schichtdicke gebildet ist.

Anschließend werden die so an den Formkörpern 20, 20' definierten Schichten aus photopolymerisierbaren Materialien durch die Belichtungseinheit 2 ortselektiv belichtet, so dass eine neue Schicht mit der gewünschten Kontur an den Formkörpern 20, 20' ausgehärtet wird. Danach wird die Bauplattform 10 mit ihrer vertikal verfahrbaren Aufhängung 30 wieder angehoben, und in den Wannensegmenten 8, 8' werden die durch Aushärtung der letzten Schichten entnommenen Mengen an photopolymerisierbaren Materialien wieder ersetzt. Im Fall von photopolymerisierbaren Materialien mit niedriger Viskosität geschieht dieses automatisch durch Nachfließen von flüssigem photopolymerisierbaren Material aus dem umgebenden Randbereichen des Wannensegments. Im Fall von Baumaterialien mit höherer Viskosität können mechanischen Fördereinrichtungen zur Anwendung können, z.B. Rakel, um photopolymerisierbaren Material in den unmittelbaren Baubereich zu schieben.

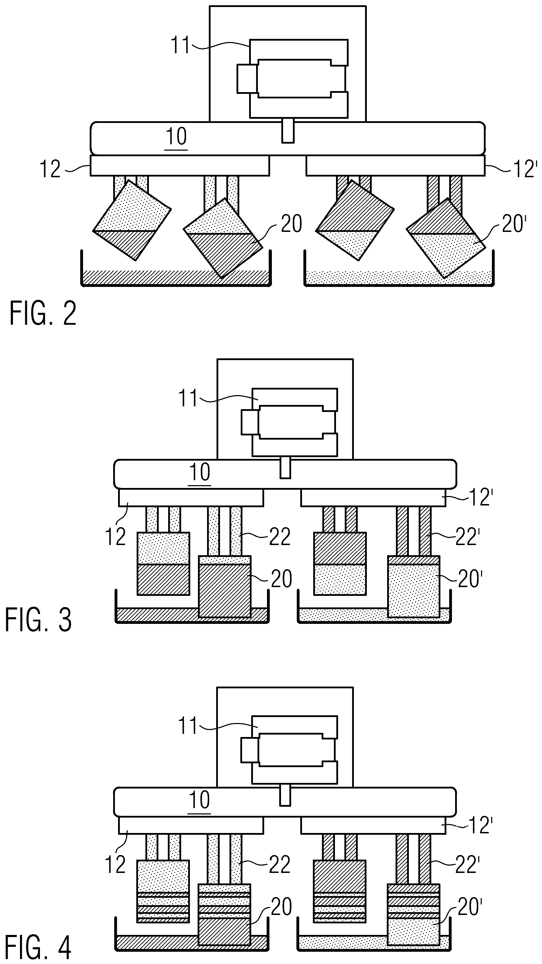

Die Bauplattform 10 ist an ihrer Oberseite mittig mit einer Gehäusekomponente versehen, in die ein Drehantrieb 11 (Figuren 2-4) integriert ist. Der Drehantrieb 11, z.B. ein Schrittmotor, ermöglicht es, die Bauplattform 10 um eine zentrale vertikale Achse um einen gewünschten Drehschritt zu drehen. Die zentrale Drehachse ist so angeordnet, dass sie auf der Rotationsymmetrieachse der n-fach rotationssymmetrischen (in diesem Fall 2-fach rotationsymmetrischen) Anordnung der Wannensegmente 8, 8' liegt. In der vereinfachten schematischen Darstellung von Figur 1 sind an der Bauplattform 10 entsprechend den beiden Wannensegmenten zwei Bauzonen 12, 12' vorhanden. Durch Drehung der Bauplattform 10 um ihre zentrale, vertikale Drehachse um 180° kann so bewirkt werden, dass die Bauzonen 12, 12' jeweils einem anderen der beiden Wannensegmente 8, 8' zugeordnet werden, wodurch für beide Bauzonen 12, 12' während des Bauvorgangs der Formkörper 20, 20 ' ein Materialwechsel bewirkt wird.

Der Betrieb des integrierten Drehantriebs wird durch eine nicht dargestellte Steuereinheit bewirkt, die als Computer oder als programmierbarer Mikroprozessor mit angeschlossenen Speichereinheiten ausgeführt sein kann, wobei die Speichereinheiten neben den 3D-Modelldaten (CAD-Daten) für die aufzubauenden Formkörper die Steuerprogramme enthalten, die für den Betrieb der vertikal verfahrbaren Aufhängung 30, des Drehantriebs 11 und der Belichtungseinheit 2 benötigt werden, um die gewünschten Formkörper schichtweise aufzubauen.

Zu den 3D-Modelldaten eines Formkörpers gehören auch Informationen zu jeweils für die auszuhärtenden Schichten zu verwendenden Baumaterialien. Die Steuereinheit wird durch Aktivierung des Drehantriebs einen Wechsel der Bauzonen 12, 12' bewirken, wenn die 3D-Modelldaten der im Bau befindlichen Formkörper 20, 20' die Information enthalten, dass nach einem Bauabschnitt mit k ausgehärteten Schichten eines Baumaterials in einem Wannensegment ein Materialwechsel zu dem Baumaterial im anderen Wannensegment durchgeführt werden soll.

In den schematischen Ansichten der Figuren 2-4 sind verschiedene Konstellationen von Formkörpern an den Bauzonen dargestellt.

In Figur 2 sind zwei Bauzonen 12, 12' an der Bauplattform 10 dargestellt, wobei an jeder Bauzone 12, 12' jeweils zwei im Bau befindliche Formkörper gezeigt sind, die jeweils an einer durch zwei Stifte angedeuteten Stützstruktur an der jeweiligen Bauzone hängen. Wenn mehrere im Bau befindliche Formkörper an einer Bauzone hängen, so liegt die absolute vertikale Lage der Materialübergänge im Raum in den Formkörpern auf gleicher Höhe; die relative vertikale Lage des Materialübergangs in dem jeweiligen Formkörper kann durch die jeweilige vertikale Länge der stiftartig dargestellten Stützstruktur festgelegt werden.

In dem in Figur 3 dargestellten Beispiel wurde jeweils der links dargestellte Formkörper an den Bauzonen 12, 12' aus einer gleichgroßen Anzahl von ausgehärteten Schichten des einen Baumaterials und des anderen Baumaterials aufgebaut, d.h. der Materialübergang liegt vertikal etwa in der Mitte der links an den Bauzonen 12, 12' aufgebauten Formkörper, wobei die die Materialreihenfolge im links dargestellten Formkörper an der Bauzone 12 umgekehrt zu der im linken Formkörper an der Bauzone 12' ist. Bei den jeweils rechts an den Bauzonen dargestellten Formkörpern 20, 20' bewirkt die längere vertikale Ausdehnung der zugehörigen Stützstrukturen 22, 22', dass die aufgebauten Formkörper 20, 20' nur aus einer kleineren Anzahl von ausgehärteten Schichten eines Baumaterials und einer größeren Anzahl von ausgehärteten Schichten des anderen Baumaterials bestehen. Durch Einstellung der Länge der Stützstrukturen 22, 22' lassen sich so verschiedene vertikale Positionierungen von Materialübergängen relativ zu den nebeneinander an einer Bauzone hängenden Formkörpern realisieren.

In diesem Zusammenhang ist aber auch festzustellen, dass bei mehreren Formkörpern an einer Bauzone ausgehärtete Materialschichten auf derselben absoluten vertikalen Höhe aus demselben Baumaterial bestehen.

In Figur 3 ist wie erläutert eine Konstellation dargestellt, in der an der Bauplattform 10 unten zwei Bauzonen 12, 12' vorgesehen sind, an denen jeweils zwei Formkörper 20, 20' aufgebaut worden sind. Während des Bauvorgangs wurde nach Aufbau der ersten Hälfte der Schichten der jeweils links an den Bauzonen 12, 12' gezeigten Formkörper durch Drehung der Bauplattform 10 um 180° ein Materialwechsel durchgeführt. Demgemäß bestehen die links an den Bauzonen 12, 12' gezeigten Formkörpern jeweils zu halbem Anteil aus dem ersten und dem zweiten Baumaterial, wobei die Lage von erstem und zweitem Baumaterial in den beiden links dargestellten Formkörpern an den Bauzonen 12, 12' komplementär zueinander sind, d.h. während der eine linke Formkörper mit dem ersten Baumaterial gebaut wurde, wurde der andere mit dem anderen Baumaterial gebaut und umgekehrt. Die vertikale Lage des Materialübergangs in den Formkörpern kann wiederum durch die vertikale Länge der Stützstrukturen 22, 22' beeinflusst werden, wie die beiden rechts an den Bauzonen 12, 12' gezeigten Formkörper illustrieren, in denen aufgrund der jeweils längeren vertikalen Stützstrukturen 22, 22' die vertikale Lage des Materialübergangs näher am oberen Ende des Formkörpers liegt.

Bei dem in Figur 2 illustrierten Bauvorgang sind die 3D-Modelldaten der aufzubauenden Formkörper in einer CAD-Software vorab verschwenkt worden, so dass die entsprechenden Formkörper jeweils um einen bestimmten Winkel zu einer vertikalen Ebene geneigt aufgebaut werden, d.h. die Stirnflächen der quaderförmigen Formkörper liegen nicht parallel zu einer vertikalen Ebene, sondern sind dazu in einem für jeden Formkörper vorgegebenen Maße geneigt. Dadurch kann bewirkt werden, dass die Ebene des Materialübergangs relativ zum Formkörper in eben diesem Maße geneigt ist, wie in Figur 2 illustriert.

Bei dem in Figur 4 illustrierten Bauvorgang wurde zunächst während der ersten Hälfte des Bauvorgangs der links an den Bauzonen 12, 12' aufgehängten Formkörper in der gleichen Weise wie in Figur 3 jeweils ein Baumaterial verwendet, sodass die links aufgehängten Formkörper in ihrer oberen Hälfte jeweils homogen aus einem Baumaterial bestehen. Nach diesem ersten Bauabschnitt wurden in kürzeren, unregelmäßigen Abständen insgesamt fünf Materialwechsel jeweils durch Drehung der Bauplattform 10 um 180° durchgeführt, um eine alternierende Schichtstruktur aufzubauen. Aufgrund der längeren Stützstrukturen 22, 22' der rechts an den Bauzonen 12, 12' aufgehängten Formkörper liegt in diesen rechts aufgehängten Formkörpern 20, 20' die alternierende Schichtfolgenabschnitt relativ weiter oben. In den Formkörpern 20, 20' für rechts an den Bauzonen 12, 12' aufgehängten Formkörper 20, 20' wurde dann der Bauvorgang in dem weiter unten liegenden Abschnitt der Formkörper 20, 20' jeweils mit einem der Baumaterialien durchgeführt, so dass die Formkörper 20, 20' in einem untenliegenden Abschnitt jeweils homogen aus einem der Baumaterialien aufgebaut sind.

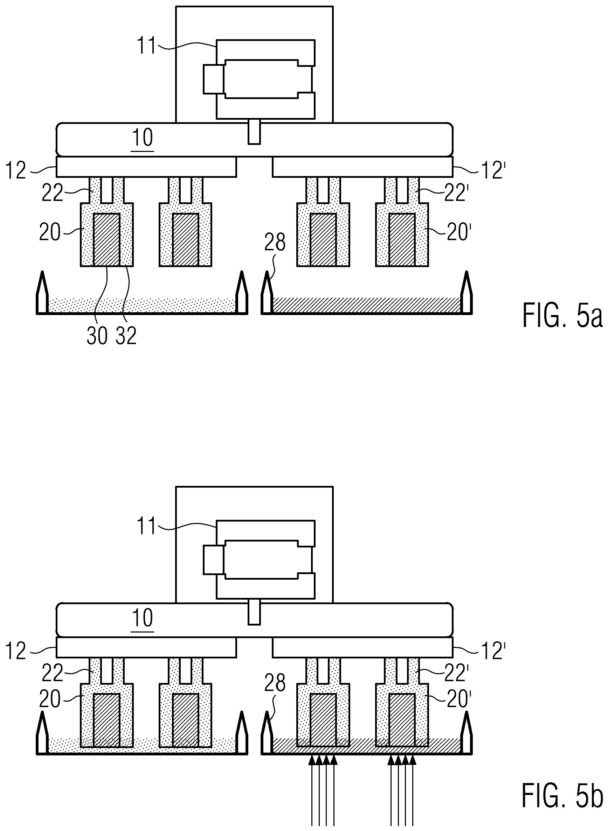

In den Figuren 5a-5h sind schematische Querschnittsansichten aufeinander folgender Verfahrensschritte eines Verfahrens illustriert, mit dem Formkörper mit einem Kern-Schale-Aufbau (Core-Shell-Structure) aufgebaut werden. In diesem Fall werden die Kerne 30 der Formkörper aus einem dunkleren Material (schraffiert dargestellt) und die Hüllen 32 aus einem helleren (transparenteren) Material (gepunktet dargestellt) darum herum gebaut, was zum Beispiel im Fall von so aufgebauten Dentalrestaurationen ein natürlicheres Aussehen ermöglicht.

In Figur 5a haben die im Bau befindlichen Formkörper an beiden Bauzonen 12 und 12' dieselbe Bauhöhe, die unteren Flächen von Hüllen- und Kern-Bereichen 32 und 30 sind bündig und schließen allesamt in einer gemeinsamen Ebene ab.

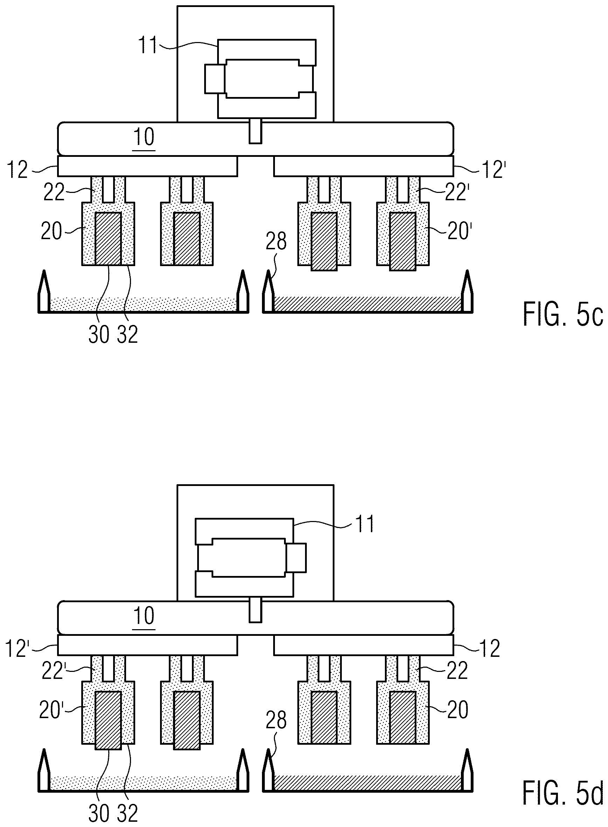

In Figur 5b wurde die Bauplattform 10 zum Aushärten der nächsten Schicht abgesenkt auf eine Höhe, so dass die Ebene der unteren Oberflächen der im Aufbau befindlichen Formkörper um eine Schichtdicke oberhalb des Wannenbodens liegt. In diesem Ausführungsbeispiel erfolgt nun eine Belichtung nur in dem der Bauzone 12' zugeordneten Wannensegment, in dem jetzt die Belichtung der Kerne der beiden im Aufbau befindlichen Formkörper erfolgt, um eine Kernschicht anzubauen, so dass nach dem Belichtungsschritt in Fig. 5b der Kernbereich der beiden im Aufbau befindlichen Formkörper an der Bauzone 12' um eine Schichtdicke vorsteht. Diesen Zustand zeigt Fig. 5c, wobei in Fig. 5c die Bauplattform 10 bereits wieder angehoben ist.

Anschließend wird die Bauplattform 10 um 180° gedreht, sodass nun die Bauzone 12' mit den Formkörpern mit den vorstehenden Kernbereichen 30 über dem Wannensegment mit dem Hüllenmaterial liegt, wie in Fig. 5d gezeigt. Anschließend wird die Bauplattform 10 so weit abgesenkt, dass die unteren Oberflächen der vorstehenden Kernbereiche 30 der Formkörper 20' an der Bauzone 12' nahezu oder in Anlage an den Wannenboden kommen.

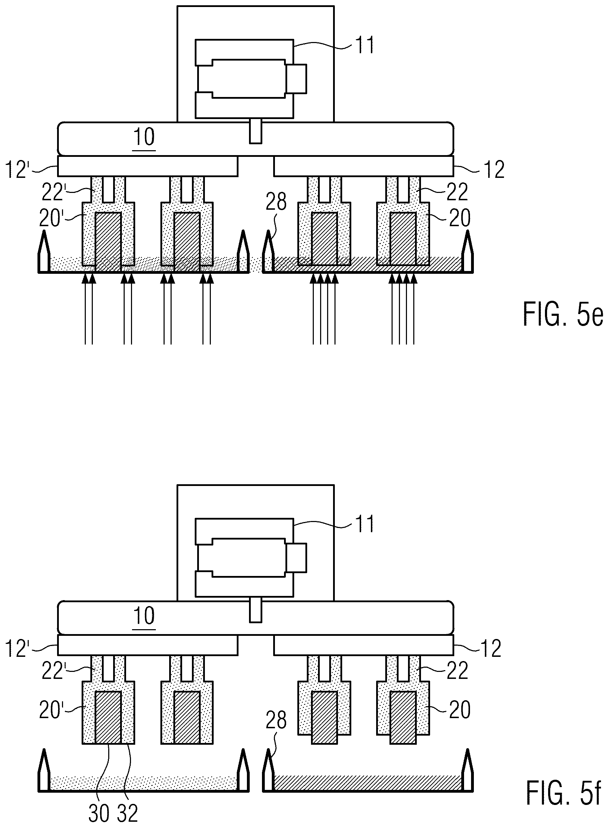

Daraufhin erfolgt in Figur 5e die Aushärtung der nächsten Schichten, und zwar simultan für die Formkörper an den Bauzonen 12 und 12', wobei für die beiden Formkörper an der Bauzone 12 nun eine Schicht Kernmaterial angebaut wird, während für die beiden Formkörper an der Bauzone 12' jeweils um den vorstehenden Kern eine Hüllenschicht angebaut wird, so dass an der Bauzone 12' eine bündige untere Ebene von Kern und Hülle für die beiden in Aufbau befindlichen Formkörpern geschaffen wird. An der Bauzone 12 haben nach dem in Fig. 5e dargestellten Belichtungsschritt die beiden Formkörper eine angebaute Kernschicht, die nun um eine Schichtdicke um die umgebende Hülle vorsteht. In Fig. 5f ist dieser Zustand nach Anheben der Bauplattform 10 dargestellt.

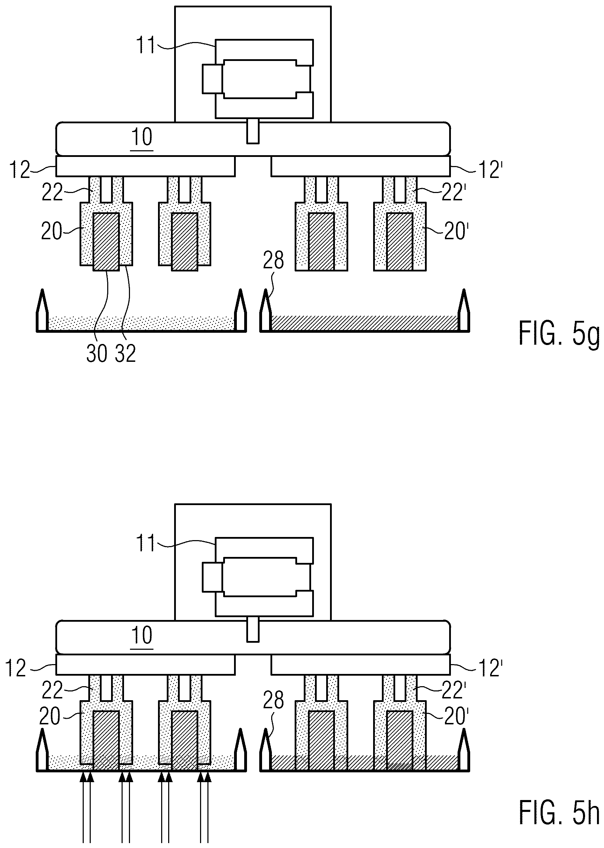

Nach Drehung der Bauplattform 10 um 180° ergibt sich der in Fig. 5g dargestellte Zustand. Danach wird die Bauplattform 10 wieder so weit abgesenkt, dass die untersten Flächenbereiche der vorstehenden Kerne der Formkörper an der Bauzone 12 in Anlage an den Wannenboden kommen. Daraufhin erfolgt nun ein in Fig. 5h dargestellter Belichtungsschritt nur für die beiden an der Bauplattform 12 befindlichen Formkörper, nämlich die Belichtung der jeweils den vorstehenden Kern umgebenden Hüllenschicht. Nach Aushärtung dieser Hüllenschichten ist wieder ein Zustand erreicht, in dem alle Hüllen- und Kernoberflächen in einer gemeinsamen horizontalen Ebene liegen.

Das in den Figuren 5a-5h illustrierte Verfahren zeichnet sich dadurch aus, dass an den Formkörpern jeweils zuerst eine Kernschicht angebaut wird, die dann vorsteht, und erst darauf folgend die umgebende Hülle angebaut wird, d.h. es wird von innen nach außen (zuerst Kernbereich, dann Hüllenbereich) gebaut, wobei im Kernbereich immer der erste Schritt durchgeführt wird, was von Vorteil sein kann, um Problemen wie Lufteinschlüssen aus dem Wege zu gehen, die sich ergeben könnten, wenn zuerst eine vorstehende Hüllenschicht angebaut würde.

In Figuren 5a-5h sind auch elastische Silikonabstreifer 28 dargestellt, mit denen bei der Drehung der Bauplattform ein mechanischer Reinigungsschritt durchgeführt wird. Der Umfang jedes Wannensegments ist von solchen Silikonabstreifern 28 umgeben. Die Bauplattform 10 wird vor dem Drehschnitt über die Wannenanordnung soweit angehoben, dass die untere Oberfläche der im Aufbau befindlichen Formkörper geringfügig unter dem oberen Rand der flexiblen Silikonabstreifer 28 liegt. Beim Drehen der Bauplattform über die Wannenanordnung streicht dabei jeweils ein Silikonabstreiferbereich über die unteren Oberflächen der im Aufbau befindlichen Formkörper, wodurch überflüssiges Material abgestreift wird und dabei auf der Seite des Silikonabstreifers 28 verbleibt, die zu dem Wannensegment gehört, dass der Formkörper gerade verlässt, so dass das abgestreifte Material wieder in das richtige Wannensegment mit demselben Material fließt.

## Patentansprüche

1. Verfahren zum simultanen Aufbau einer Vielzahl von Formkörpern durch schichtweises, stereolithographisches Aushärten von photopolymerisierbaren Materialien, wobei in wenigstens einer ersten (12) und einer neben der ersten liegenden, zweiten Bauzone (12') an der Unterseite einer vertikal verfahrbaren, horizontal ausgedehnten Bauplattform (10) jeweils wenigstens ein Formkörper (20, 20') aufgebaut wird, indem
die Bauplattform (10) zu einer Wannenanordnung (4) hin abgesenkt wird, die in wenigstens einem ersten Wannensegment (8) und einem zweiten, neben dem ersten liegenden Wannensegment (8') mit jeweils durchsichtigem Wannensegmentboden unterschiedliche photopolymerisierbare Materialien enthält, wobei jede der ersten und zweiten Bauzonen (12, 12') über einem der ersten und zweiten Wannensegmente (8, 8') liegend und in dessen Umfang passend angeordnet ist,
durch das Absenken der Bauplattform (10) auf die Wannensegmentböden zu für die im Bau befindlichen Formkörper in der ersten und der zweiten Bauzone Materialschichten mit definierter Schichtdicke gebildet werden,
die gebildeten Schichten durch eine Belichtungseinheit (2) durch die durchsichtigen Wannensegmentböden hindurch ortselektiv belichtet werden, um sie ortselektiv auszuhärten, und
die Bauplattform (10) wieder angehoben wird, gegebenenfalls fehlende photopolymerisierbare Materialien zugeführt und die vorher beschriebenen Schritte wiederholt werden, bis die Formkörper (20, 20') an der ersten und an der zweiten Bauzone durch sukzessive ausgehärtete Schichten aufgebaut sind,
**dadurch gekennzeichnet, dass** die Bauplattform (10) während des Bauvorgangs nach einem Bauabschnitt mit Aushärtung einer für diesen Bauabschnitt vorgegebenen Anzahl von Schichten durch einen Drehantrieb (11) um eine zentrale, vertikale Drehachse so gedreht wird, dass die erste und die zweite Bauzone (12, 12') nach der Drehung jeweils über einem anderen Wannensegment (8, 8') liegen, um daraufhin den Bauvorgang in der ersten und in der zweiten Bauzone (12, 12') jeweils mit einem anderen photopolymerisierbaren Material fortzusetzen.

2. Verfahren nach Anspruch 1, **dadurch gekennzeichnet, dass** eine Wannenanordnung (4) mit zwei Wannensegmenten (8, 8') und eine Bauplattform mit zwei Bauzonen (12, 12') verwendet und die Bauplattform (10) zum Wechsel des photopolymerisierbaren Baumaterials für die Formkörper an der ersten und der zweiten Bauzone um 180° gedreht wird.

3. Verfahren nach einem der Ansprüche 1, **dadurch gekennzeichnet, dass** eine quadratische, in vier Quadranten mit jeweils einem Wannensegment unterteilte Wannenanordnung und eine in vier Quadranten unterteilte Bauplattform, von denen zwei, drei oder vier jeweils mit einer daran befindlichen Bauzone versehen ist, verwendet und zum Materialwechsel eine Drehung der Bauplattform um 90° oder ein Vielfaches davon durchgeführt wird.

4. Verfahren nach Anspruch 1, **dadurch gekennzeichnet, dass** entweder (i) eine kreisförmige Wannenanordnung, die in eine Anzahl von *n* ≥ 2 Wannensegmente gleicher Größe unterteilt ist, und eine Bauplattform mit einer Anzahl zwischen 2 und n kreissegmentförmigen Bauzonen gleicher Größe daran verwendet wird und die Bauplattform zum Materialwechsel um einen Winkel von 360°/n oder ein Vielfaches davon gedreht wird, oder (ii) eine Wannenanordnung in Form eines regelmäßigen n-Ecks mit *n* ≥ 3, das in *n* Wannensegmente in Form gleichschenkliger Dreiecke gleicher Größe unterteilt ist, und eine Bauplattform mit einer Anzahl zwischen 2 und *n* Bauzonen in Form von gleichschenkligen Dreiecken gleicher Größe daran verwendet wird und die Bauplattform zum Materialwechsel um einen Winkel von 360°/n oder ein Vielfaches davon gedreht wird.

5. Verfahren nach einem der vorhergehenden Ansprüche, **dadurch gekennzeichnet, dass** die vertikale Lage eines Materialübergangs in einem Formkörper an einer Bauzone durch Auswahl der Anzahl der gebauten Schichten festgelegt wird, bis durch Drehung der Bauplattform (10) ein Materialwechsel durchgeführt wird.

6. Verfahren nach einem der vorhergehenden Ansprüche, **dadurch gekennzeichnet, dass** die vertikale Lage eines Materialübergangs in einem Formkörper in einer Bauzone durch Auswahl der Anzahl der gebauten Schichten festgelegt wird, bis durch Drehung der Bauplattform ein Materialwechsel durchgeführt wird, und die vertikale Lage eines Materialübergangs in einem anderen Formkörper unabhängig davon durch Festlegung einer ausgewählten vertikalen Länge einer Stützstruktur (22, 22') bestimmt wird, an der der andere Formkörper an der Oberfläche der zugehörigen Bauzone aufgehängt ist.

7. Verfahren nach einem der vorhergehenden Ansprüche, **dadurch gekennzeichnet, dass** an einer Bauzone ein Formkörper aufgebaut wird, wobei die Ausrichtung der Ebene des Materialübergangs im Formkörper durch Festlegung der Neigung der dreidimensionalen Modelldaten des im Bau befindlichen Formkörpers relativ zur Ebene der Bauzone individuell gewählt und dadurch in dem Formkörper eine individuell festgelegte Neigung der Materialübergangsebene zum Formkörper realisiert wird.

8. Verfahren nach einem der vorhergehenden Ansprüche, **dadurch gekennzeichnet, dass** die Belichtungseinheit (2) so gesteuert wird, dass der für die Aushärtung einer Schicht durch die Einstrahlung der Belichtungseinheit bewirkte Energieeintrag pro bestrahltem Flächenelement für jedes Wannensegment einen individuell vorgegebenen, auf das in dem jeweiligen Wannensegment befindliche photopolymerisierbare Material abgestimmten Wert hat.

9. Verfahren nach einem der vorhergehenden Ansprüche, bei dem aus photopolymerisierbaren Materialien als Formkörper Dentalrestaurationen in Form von herausnehmbaren dentalen Teil- oder Vollprothesen aufgebaut werden.

10. Verfahren nach Anspruch 9, **dadurch gekennzeichnet, dass** als Formkörper Dentalrestaurationen aufgebaut werde, die aus Kompositwerkstoffe, Glaskeramik oder Oxidkeramik enthalten.

11. Verfahren nach einem der vorhergehenden Ansprüche, **dadurch gekennzeichnet, dass** bei Materialwechseln vor der Fortsetzung des Bauvorgangs in dem anderen Material ein Zwischenreinigungsschritt durchgeführt wird, wobei der Zwischenreinigungsschritt eine chemische Reinigung in Lösungsmittel, eine mechanische Reinigung mit einem mechanischen Reinigungshilfsmittel, wie beispielsweise einem Tuch, einem Schwamm oder einem Silikonabstreifer, oder eine Kombination der genannten chemischen und mechanischen Reinigung beinhaltet.

12. Verfahren nach Anspruch 11, **dadurch gekennzeichnet, dass** nach dem Zwischenreinigungsschritt ein Trocknungsschritt durchgeführt wird.

13. Verfahren nach einem der vorhergehenden Ansprüche, **dadurch gekennzeichnet, dass** nach Aushärten von ersten Bereichen (30) von Schichten von Formkörpern an den Bauzonen (12, 12') die Bauplattform um die vertikale Drehachse gedreht wird und anschließend auf gleicher vertikaler Höhe an die ersten Bereiche angrenzende zweite Bereiche (32) der Schichten mit einem anderen photopolymerisierbaren Material ausgehärtet werden.

14. Verfahren nach Anspruch 13, **dadurch gekennzeichnet, dass** die ersten Bereiche der Schichten Kernbereiche (30) der Formkörper und die zweiten Bereiche Hüllenbereiche (32) sind, die die Kernbereiche der Formkörper umgeben.

15. Vorrichtung zum simultanen Aufbau einer Vielzahl von Formkörpern durch schichtweises, stereolithographisches Aushärten von photopolymerisierbaren Materialien, mit
einer vertikal verfahrbar aufgehängten, horizontal ausgedehnten Bauplattform (10), an deren Unterseite wenigstens eine erste Bauzone (12) und eine neben der ersten liegende, zweite Bauzone (12) vorhanden ist,
eine sich unter der Bauplattform (10) befindliche Wannenanordnung (4), die wenigstens ein erstes Wannensegment (8) und ein zweites, neben dem ersten liegendes Wannensegment (8') zur Aufnahme unterschiedlicher photopolymerisierbarer Materialien aufweist, wobei die Wannensegmentböden durchsichtig sind,
wobei jede der ersten und zweiten Bauzonen (12, 12') über einem der ersten und zweiten Wannensegmente 88, 8') liegend und in dessen Umfang passend angeordnet ist, und
einer unter der Wannenanordnung (4) angeordnete Belichtungseinheit (2) zur ortsselektiven Belichtung von photopolymerisierbaren Schichten durch die Wannensegmentböden hindurch,
**dadurch gekennzeichnet, dass** die vertikal verfahrbare Bauplattform (10) um eine vertikale Achse drehbar gelagert und mit einem integrierten Drehantrieb (11) versehen ist, der dazu ansteuerbar ist, um die Bauplattform um einen vorgegebenen Drehschritt zu drehen, wobei die vertikale Drehachse zentral zu der Bauplattform (10) und der Wannenanordnung (4) so verläuft, dass durch Drehung der Bauplattform (10) um den vorgegebenen Drehschritt die erste und die zweite Bauzone (12, 12') nach der Drehung jeweils über einem anderen von den ersten und zweiten Wannensegmenten (8, 8') liegen, um den Bauvorgang in der ersten und in der zweiten Bauzone jeweils mit einem anderen photopolymerisierbaren Material fortzusetzen.

16. Vorrichtung nach Anspruch 15, **dadurch gekennzeichnet, dass** über Umfangswände jedes Wannensegments hinaus reichende Silikonabstreifer (28) vorgesehen sind, die dazu ausgestaltet sind, bei der Drehung der Bauplattform (10) über die Unterseite der zuletzt angebauten Schicht zu streichen, um überschüssiges, nicht polymerisiertes photopolymerisierbares Material abzustreifen.
